# EUROPÄISCHE PATENTSCHRIFT

(11) **EP 2 791 896 B1**
(45) Veröffentlichungstag und Bekanntmachung des Hinweises auf die Patenterteilung: **21.10.2015**
(21) Anmeldenummer: 12808682.4
(22) Anmeldetag: 10.12.2012
(51) Int. Cl.: G06T 3/40

(54) **VERFAHREN ZUR ERZEUGUNG VON SUPERAUFGELÖSTEN BILDERN MIT VERBESSERTER BILDAUFLÖSUNG UND MESSVORRICHTUNG**
METHOD FOR GENERATING SUPER-RESOLUTION IMAGES HAVING IMPROVED IMAGE RESOLUTION AND MEASURING DEVICE
PROCÉDÉ DE GÉNÉRATION D'IMAGES SUPERÉSOLUES À RÉSOLUTION AMÉLIORÉE ET DISPOSITIF DE MESURE ASSOCIÉ

(30) Priorität: 16.12.2011 DE 102011121332
(43) Veröffentlichungstag der Anmeldung: 22.10.2014
(73) Patentinhaber: Testo AG, 79853 Lenzkirch (DE)
(72) Erfinder: EVERS-SENNE, Jan-Friso, 79288 Titisee-Neustadt (DE); STRATMANN, Martin, 79117 Freiburg i. Br. (DE); SCHMIEDER, Matthias, 79117 Freiburg i. Br. (DE); LANGE, Jörg, 79108 Freiburg (DE)
(74) Vertreter: Börjes-Pestalozza, Henrich
(86) Internationale Anmeldenummer: PCT/EP2012/005096
(87) Internationale Veröffentlichungsnummer: WO 2013/087188

(56) Entgegenhaltungen:
- Krzysztof Malczewski ET AL: "Super-Resolution Thermal Image Reconstruction", Proceedings of IWSSIP 2010 - 17th International Conference on Systems, Signals and Image Processing, 17. Juni 2010 (2010-06-17), XP055053067, Gefunden im Internet: URL:http://www.iwssip.org/archive/2010/Pro ceedings/nav/papers/paper_136.pdf [gefunden am 2013-02-12]
- STEPHEN WON ET AL: "<title>Sub-pixel registration of moving objects in visible and thermal imagery with adaptive segmentation</title>", PROCEEDINGS OF SPIE, Bd. 8050, 13. Mai 2011 (2011-05-13), Seiten 80501A-80501A-9, XP055053103, ISSN: 0277-786X, DOI: 10.1117/12.883262

## Beschreibung

Die Erfindung betrifft ein Verfahren zur Erzeugung von SR-Bildern mit verbesserter Bildauflösung, wobei eine Folge von aus Pixeln zusammengesetzten Einzelbildern in einem nicht-sichtbaren Spektralbereich aufgenommen wird und die Einzelbilder in einem Optimierungsverfahren so zu einem SR-(Superresolutions-) Bild kombiniert' werden, dass die Einzelbilder der Folge mittels Abtastfunktionen als Abtastungen des SR-Bilds modellierbar sind.

Gerade im nicht-sichtbaren Spektralbereich ist die Bildauflösung durch die Detektoren der zur Aufnahme der Einzelbilder verwendeten Messvorrichtung dadurch begrenzt, dass zu kleine Detektoren und eine zu hohe Anzahl von Detektoren pro Messfläche zu hohe Fertigungskosten haben.

Die Erfindung beschäftigt sich mit der Fragestellung, wie die Auflösung erhöht werden kann, ohne die Auflösung des Detektors erhöhen zu müssen.

Hierzu sind eine Reihe von Verfahren entwickelt worden, welche die Bewegung einer Kamera oder eines Detektors verwenden, um mehrere aufgenommene Einzelbilder zu einem höher aufgelösten SR-Bild kombinieren zu können.

Die Kombination wird hierbei so ausgeführt, dass die Einzelbilder als Abtastungen des SR-Bildes, durch welche die optischen Eigenschaften der Messvorrichtung und die Detektorauflösung modellierbar sind, darstellbar sind.

Die bekannten Verfahren nutzen somit geringe Abweichungen zwischen den Einzelbildern, um eine höhere Bildauflösung des SR-Bilds zu erreichen. In der Praxis könnten hierbei jedoch Probleme auftreten, wenn die Einzelbilder voneinander zu stark abweichen, beispielweise weil sich die aufgenommenen Objekte bewegen oder stark verändern.

Da in dieser Situation die Gefahr besteht, dass das SR-Bild auch Artefakte aufweist, die in keinem der Einzelbildern enthalten sind, wird in diesem Fall üblicherweise die aufgenommene Folge von Einzelbildern verworfen, und es wird eine neue Folge von Einzelbildern zur Erstellung eines SR-Bilds aufgenommen.

Die Erfindung betrifft weiter eine Messvorrichtung mit Mitteln zur Aufnahme einer Folge von Bildern in einer nicht-sichtbaren Spektralbereich. Derartige Messvorrichtungen werden mit Vorteil zur Ausführung des beschriebenen Verfahrens eingesetzt.

Aus Krzysztof Malczewski et al.: Super-Resolution Thermal Image Reconstruction, Proceedings of IWSSIP 2010 - 17th International Conference on Systems, Signals and Image Processing, 17. Juni 2010, ist ein Verfahren bekannt, bei welchem rekursiv ein hochauflösendes Bild berechnet wird, indem eine Differenz zwischen berechneten und aufgenommenen niedrigaufgelösten Bildern in den hochauflösenden Bildraum transformiert wird.

Aus Stephen Won et al.: Sub-pixel registration of moving objects in visible and thermal imagery with adaptive segmentation, Proceedings of SPIE, Bd. 8050, 13. Mai 2011, Seiten 8051A-80501A-9, sind Verfahren zur Segmentierung vor der Bildregistrierung bekannt.

Die Erfindung liegt die Aufgabe zugrunde, dass eingangs beschriebene Verfahren robuster zu gestalten.

Zur Lösung dieser Aufgabe sind erfindungsgemäß die Merkmale von Anspruch 1 vorgesehen. Insbesondere ist somit bei dem eingangs beschriebenen Verfahren erfindungsgemäß vorgesehenen, dass in einem ersten Schritt ein optischer Fluss zu den Einzelbildern der Folge automatisch berechnet und jedem Einzelbild ein den optischen Fluss beschreibendes Verschiebungsyektorfeld zugeordnet wird, dass in einem zweiten Schritt die Einzelbilder in wenigstens zwei Segmente segmentiert werden, wobei die Pixel innerhalb eines Segments jeweils einen Verschiebungsvektor in einem vorgegebenen Teilbereich des Wertebereichs des Verschiebungs-vektorfelds aufweisen, und dass in einem dritten Schritt das Optimierungsverfahren ausgeführt wird, wobei für die Segmente jeweils wenigstens ein separater Variationsparameter variiert wird. Mit diesen Merkmalen ist vorteilhaft erreichbar, dass das Optimierungsverfahren auf den Bildinhalt derart angepasst werden kann, dass Bildbereiche mit stark veränderlichem Bildinhalt auf andere Weise verarbeitet werden können als Bildbereiche mit schwach veränderlichem oder konstantem Bildinhalt. Eine typische Situation, die mit der Erfindung gut verarbeitbar ist, ist die Verarbeitung von Einzelbildern, die ein bewegliches Objekt vor einem konstanten Hintergrund darstellen. Die erwähnten Bildbereiche, die echt kleiner als die Einzelbilder und somit eine Untermenge der jeweiligen Einzelbilder sind, werden durch die beschriebene Segmentierung als Segmente ausgezeichnet und zur weiteren Verarbeitung bereitgestellt.

Die Einzelbilder und das SR-Bild sind vorzugsweise zweidimensional.

Der optische Fluss wird mit an sich bekannten Verfahren durch Vergleich der Einzelbilder miteinander berechnet. Das Verschiebungsvektorfeld, welches als Berechnungsergebnis vorliegt, beschreibt pixelweise oder lokal, wie sich ein dem Pixel oder der Pixelgruppe zugeordneter Bildinhalt zwischen den Einzelbildern verschoben hat.

Die Gesamtheit der Vektoren, die das Verschiebungsvektorfeld auf den Pixeln des jeweiligen Einzelbildes annimmt, beschreibt den Wertbereich des Verschiebungsvektorfelds. Dieser Wertebereich wird in Teilbereiche unterteilt, und es werden Segmente segmentiert, für welche das Verschiebungsvektorfeld Verschiebungsvektoren in den Teilbereichen annimmt. Somit werden die Einzelbilder in so viele Segmente segmentiert, wie es Teilbereiche des Wertebereichs des Verschiebungsvektorfelds gibt. Da die Länge den Verschiebungsvektoren jeweils beschreibt, um welche Distanz der lokale Bildinhalt zwischen zwei Einzelbilder verschoben ist, können auf dieser Weise Bildbereiche, in denen eine starke Änderung des Bildinhalts zwischen den Einzelbildern vorliegt, von solchen Bildbereichen, in welchen nur eine geringe oder gar keine Änderung der Bildinhalte vorliegen, getrennt werden. Da der Winkel der Verschiebungsvektoren die Richtung der Relativverschiebung angibt, können Bildbereiche, deren Bildinhalte sich in voneinander verschiedene Richtungen bewegen, auf einfache Weise getrennt und jeweils und individuell betrachtet werden.

Die Segmente können hierbei rechteckige Umrisse aufweisen, die in ihren Abmessungen bei der Segmentierung angepasst werden, oder es können Segmente mit unregelmäßigen Konturen verwendet werden. Die Segmente können zusammenhängend oder aus mehreren voneinander getrennten Bestandteilen ausgebildet sein.

Besonders günstig ist es, wenn die Einzelbilder in einem vorgelagerten Schritt der erfindungsgemäßen Verfahrens mit Bildaufnahmemitteln einer Messvorrichtung aufgenommen und zur Weiterverarbeitung bereitgestellt werden.

In dem Optimierungsverfahren wird mit an sich bekannten Methoden eine Energiefunktion optimiert, welche das Abbildungsverhalten einer bei der Aufnahme der Einzelbilder verwendeten Abbildungsoptik und eines bei der Aufnahme der Einzelbilder verwendeten Detektors beschreibt. Bei der Optimierung werden das SR-Bild und wenigstens ein Variationsparameter, welcher die Abbildungseigenschaften beschreibt, variiert, bis die Einzelbilder der Folge mit den Abtastfunktionen als Abtastungen des SR-Bilds mit möglichst kleinem Fehler darstellbar sind.

Zur mathematischen Beschreibung des Abbildungsverhaltens wird oft auf die SR-Bilder ein Operator angewendet, welcher wenigstens aus einer Faltungsoperation mit einer Punktspreizfunktion und einer Auflösungsreduktion zusammengesetzt ist.

Die Erfindung bietet als Vorteil, dass für die einzelnen Segmente jeweils ein angepasster Variationsparameter oder ein angepasster Satz von Variationsparametern anwendbar ist. Auf diese Weise kann das Optimierungsverfahren noch besser an den Bildinhalt der Einzelbilder angepasst werden, wodurch sich die Robustheit des Verfahrens erhöht.

Beispielweise kann vorgesehen sein, dass im dritten Schritt für jedes Segment ein Verschiebungsvektor aus dem zugehörigen Teilbereich ausgewählt und zur Festlegung des Startpunkts des Optimierungsverfahrens verwendet wird. Von Vorteil ist dabei, dass das Optimierungsverfahren verkürzbar ist, da das Endergebnis bereits nach weniger Berechnungsschritten erreichbar ist.

Vorzugsweise ist vorgesehen, dass die Segmente in dem Optimierungsverfahren individuell maskiert werden. Auf diese Weise ist einfach erreichbar, dass sich die Optimierungsverfahren für die einzelnen Segmente nicht gegenseitig beeinflussen oder stören. Hierbei wird unter einer Maskierung eine Verknüpfung des jeweiligen Bilds mit einer Zahlenmatrix verstanden, durch welche irrelevante oder störende Bildausschnitte ausgeblendet werden.

Bei einer Ausgestaltung der Erfindung kann vorgesehen sein, dass ein Einzelbild der Folge als Referenz-Einzelbild ausgewählt wird. Von Vorteil ist dabei, dass eine Referenz für die Berechnungen des optischen Flusses auf einfache Weise definierbar ist.

Hierbei kann vorgesehen sein, dass das Referenz-Einzelbild bei fortlaufender Aufnahme von Einzelbildern in der Folge der Einzelbilder wandert.

Besonders günstig ist es dabei, wenn die Verschiebungsvektorfelder in Bezug auf das Referenz-Einzelbild berechnet werden.

Bei einer Ausgestaltung der Erfindung kann vorgesehen sein, dass vor der Berechnung des optischen Flusses in einer globalen Registrierung für jedes Einzelbild eine globale oder starre Transformation berechnet wird, mit welcher korrespondierende Bildinhalte der Einzelbilder optimal in Deckung miteinander oder mit einem Referenz-Einzelbild bringbar sind. Von Vorteil ist dabei, dass die erforderliche Rechenkapazität für die Berechnung des optischen Flusses reduzierbar ist. Von Vorteil ist weiter, dass eine gleichartige Bildverschiebung des gesamten Bildinhaltes vor der Segmentierung kompensierbar ist. Auf diese Weise sind Offsets oder eine Hintergrundbewegung einfach herausrechenbar.

Hierbei wird unter einer globalen oder starren Transformation eine Transformation der Bildinhalte verstanden, welche auf die Pixel eines Einzelbildes gleichermaßen oder auf gleiche Weise angewendet wird. Eine globale oder starre Transformation ist somit das Gegenteil einer lokalen oder pixelabhängigen Transformation und erfasst Verschiebungen, Drehungen und/oder Skalierungen des Einzelbildes als Ganzes gegenüber den übrigen Einzelbildern oder gegenüber dem Referenz-Einzelbild.

Bei einer Ausgestaltung der Erfindung kann vorgesehen sein, dass im Optimierungsverfahren eine Energiefunktion optimiert wird. Vorzugsweise bewertet die Energiefunktion die Abweichung der Einzelbilder von dem mit einem mathematischen Modell, welches die Abbildungseigenschaften der verwendeten Messvorrichtung beschreibt, abgebildeten SR-Bild. Diese mathematische Modellierung kann wenigstens eine Faltungsoperation zur Beschreibung des Abbildungsvorganges und eine Bildauflösungs-Reduktion zur Beschreibung des verwendeten Detektors umfassen. Von Vorteil ist dabei, dass Mittel bereit gestellt sind, mit denen das SR-Bild automatisch, also computerimplementiert, ermittelbar ist.

Es kann vorgesehen sein, dass die Energiefunktion einen Term aufweist, welcher ein Bildrauschen modelliert. Von Vorteil ist dabei, dass realistische Abbildungsvorgänge modellierbar sind.

Es kann vorgesehen sein, dass die Variationsparameter jeweils eine relative Bildverschiebung des Segmentes beschreiben. Von Vorteil ist dabei, dass unwillkürliche Bewegungen der zur Aufnahme eingesetzten Messvorrichtung zwischen den zeitlich aufeinander folgenden Aufnahmen zweier Einzelbilder simulierbar und zu Erzeugung des SR-Bilds nutzbar sind.

Es kann vorgesehen sein, dass die Variationsparameter jeweils eine Abtastungsfunktion oder Punktspreizfunktion definieren. Hierbei wird unter einen Punktspreizfunktion eine Funktion verstanden, die die Abbildung eines idealisierten punktförmigen Objektes mit der verwendeten Messvorrichtung beschreibt. Mit der Abtastfunktion ist eine Diskretisierung, die beispielweise durch die Abmessungen und die Auflösung des Detektors erzwungen ist, beschreibbar.

Bei einer Ausgestaltung der Erfindung kann vorgesehen sein, dass aus den Unterteilungen der Einzelbilder in Segmente jeweils eine Unterteilung des SR-Bilds in SR-Segmente abgeleitet wird. Von Vorteil ist dabei, dass das Optimierungsverfahren für die SR-Segmente des SR-Bilds separat ausführbar ist, was eine nochmals verbesserte Anpassung an die jeweiligen Bildinhalte und deren Veränderungen in den Segmenten erlaubt. Beispielweise kann vorgesehen sein, dass Integrale, die zur Auswertung der Energiefunktion berechnet werden müssen, auf den SR-Segmenten separat voneinander ausgerechnet werden und/oder dass für die einzelnen SR-Segmente unterschiedliche Punktspreizfunktionen zur Rekonstruktion der Einzelbilder in der Energiefunktion verwendet werden.

Es kann vorgesehen sein, dass im Optimierungsverfahren nach Optimierung der Variationsparameter iterativ ein angepasstes SR-Bild erstellt wird, für welches die Variationsparameter anschließend erneut optimiert werden. Von Vorteil ist dabei, dass eine nochmals verbesserte Qualität des SR-Bilds erreichbar ist.

Bei einer Ausgestaltung der Erfindung kann vorgesehen sein, dass im dritten Schritt festgelegt wird, für welche Segmente der Einzelbilder das Optimierungsverfahren ausgeführt wird. Von Vorteil ist dabei, dass mittels Maskierung oder dergleichen festlegbar ist, welche Segmente in dem Optimierungsverfahren ausgeblendet werden sollen. Somit können Segmente, für die aufgrund einer zu starken Veränderung des Bildinhaltes keine brauchbaren Ergebnisse erzielbar sind, von dem Optimierungsverfahren ausgeschlossen werden. Auf dieser Weise ist die Qualität des Ergebnisses des SR-Bildes für die übrigen Segmente beziehungsweise SR-Segmente nochmals steigerbar.

Es kann auch vorgesehen sein, dass das Optimierungsverfahren nur für diejenigen Segmente der Einzelbilder oder SR-Segmente des SR-Bilds ausgeführt wird, deren zugehörige Verschiebungsvektoren in einem Vorgabebereich liegen. Auf diese Weise ist vermeidbar, dass Segmente mit zu großen Veränderungen des Bildinhaltes das Rechenergebnis ungünstig beeinflussen können.

Alternativ kann vorgesehen sein, dass das Optimierungsverfahren nur für diejenige Segmente der Einzelbilder oder diejenigen SR-Segmente des SR-Bildes ausgeführt wird, deren zugehörige Verschiebungsvektoren außerhalb eines Vorgabebereichs liegen. Von Vorteil ist dabei, dass auf einfache Weise solche Segmente von der Weiterverarbeitung ausschließbar sind, für welche keine signifikante Verbesserung der Bildauflösung erwartbar ist, da sich der Bildinhalt zu wenig verändert. Somit ist Rechenkapazität einsparbar. Es kann dann vorgesehen sein, dass für diese Segmente der zwischen den Einzelbildern nahezu unveränderte Bildinhalt in das zugehörige SR-Segment bzw. das SR-Bild übernommen und das SR-Bild durch Interpolation oder Messwertvervielfältigung zur Erreichung der Bildauflösung des Bilds ergänzt wird.

Die Erfindung ist mit besonders großem Vorteil einsetzbar, wenn der nicht-sichtbare Spektralbereich ein infraroter Spektralbereich und die aufgenommenen Einzelbilder Wärmebilder sind.

Zur Lösung der genannten Aufgabe ist bei einer Messvorrichtung der eingangs beschriebenen Art erfindungsgemäß vorgesehen, dass eine Bildauswerteeinheit zur Ausführung eines erfindungsgemäßen Verfahrens ausgebildet und eingerichtet ist. Die Einrichtung ist vorzugsweise durch entsprechende Programmierung der Bildauswerteeinheit ausgeführt, wobei für die einzelnen erfindungsgemäßen Verfahrensschritte jeweils zugehörige Programmmodule ausführbar bereitgestellt sind.

Die Erfindung wird nun anhand eines Ausführungsbeispiels näher beschrieben, ist jedoch nicht auf dieses Ausführungsbeispiel beschränkt. Weitere Ausführungsbeispiele ergeben sich durch Kombination einzelner oder mehrerer Merkmale der Schutzanspruche untereinander und/oder mit einzelnen oder mehreren Merkmalen des Ausführungsbeispiels.

Es zeigt
- Fig.1: eine stark vereinfachte und schematisierte Prinzipdarstellung zur Erläuterung des erfindungsgemäßen Verfahrens,
- Fig.2: eine erfindungsgemäße Messvorrichtung in einer dreidimensionalen Schrägansicht von vorn und
- Fig.3: die erfindungsgemäße Messvorrichtung gemäß Figur 2 in einer dreidimensionalen Schrägansicht von hinten.

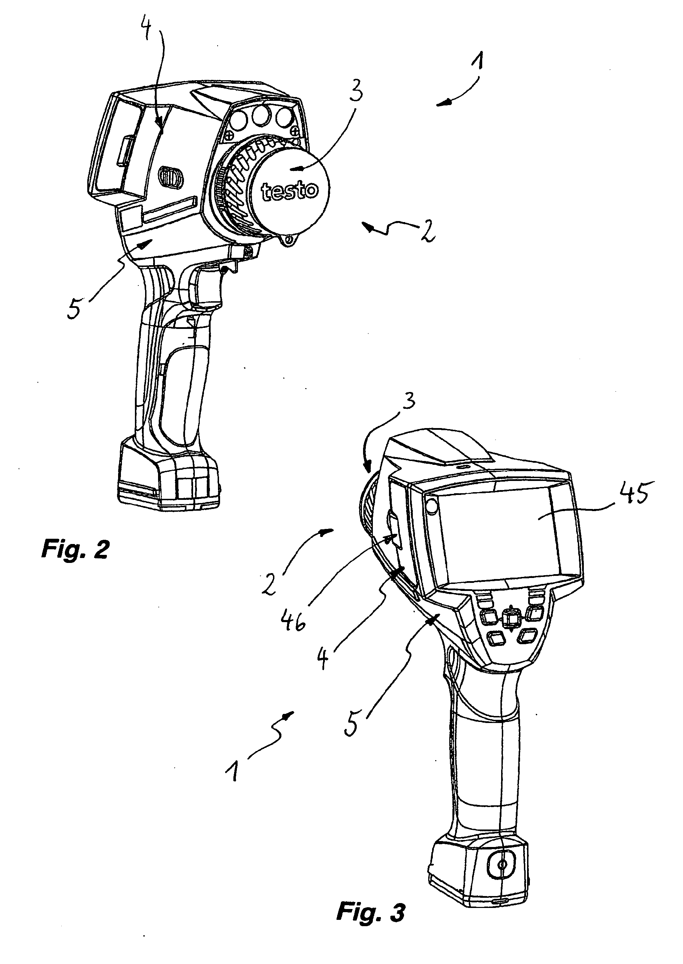

Die Figuren 2 und 3 zeigen in dreidimensionalen Schrägansichten von vorn und von hinten eine im Ganzen mit 1 bezeichnete erfindungsgemäße Messvorrichtung. Im beschriebenen Ausführungsbeispiel ist die Messvorrichtung 1 als Wärmebildkamera ausgebildet.

Die Messvorrichtung 1 weist in an sich bekannter Weise Bildaufnahmemittel 2 zur Aufnahme einer Folge von Bildern in einem nicht-sichtbaren Spektralbereich auf. Bei der hier dargestellten Wärmebildkamera als Messvorrichtung 1 wird ein infraroter Spektralbereich genutzt.

Die Bildaufnahmemittel 2 umfassen hierzu eine Aufnahmeoptik 3, mit welcher elektromagnetische Strahlung in dem nicht-sichtbaren Spektralbereich erfassbar ist, und einen Bildaufnahmedetektor 4, welcher im Inneren der Messvorrichtung 1 hinter der Aufnahmeoptik 3 angeordnet ist.

Der Bildaufnahmedetektor 4 ist in dem erwähnten nicht-sichtbaren Bereich empfindlich und ist zur Erfassung von Bildern, also zweidimensionalen Messwertanordnungen, welche die räumliche Verteilung eines Messwertes, hier einer Temperatur oder einer temperaturbezogenen Größe wiedergeben, eingerichtet.

Der Bildaufnahmedetektor 4 weist eine Detektorauflösung auf, durch welche die aufgenommenen Bilder aus Pixeln zusammengesetzt sind, wobei jedes Pixel mit einem Messwert des aufgenommenen Bildes belegt ist.

In der Messvorrichtung 1 ist eine Bildauswerteeinheit 5 ausgebildet und zur Ausführung des nachfolgend beschriebenen erfindungsgemäßen Verfahren eingerichtet.

Im Ausführungsbeispiel ist die Bildauswerteeinheit 5 als Datenverarbeitungseinheit ausgebildet und durch entsprechende Programmierung eingerichtet.

Mit dem Bildaufnahmedetektor 4 der Messvorrichtung 1 wird in an sich bekannten Weise eine Folge von Einzelbildern 6, 7, 8 aufgenommen und zur Weiterverarbeitung bereitgestellt, indem elektromagnetische Strahlung in dem erwähnten nicht-sichtbaren Spektralbereich mit der Aufnahmeoptik 3 erfasst und ausgemessen wird.

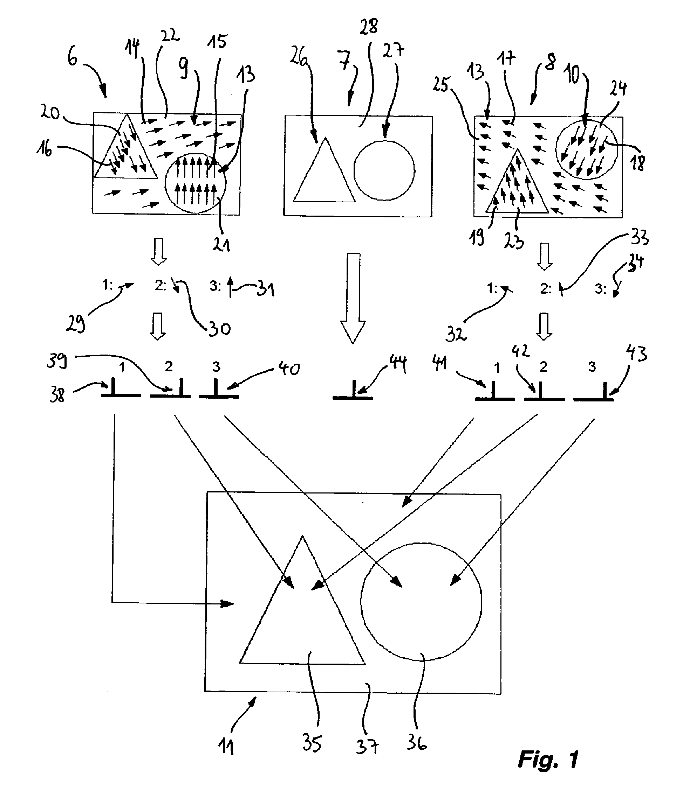

Als Ergebnis der Messung liegt somit für jedes Einzelbild 6, 7, 8 eine zweidimensionale Anordnung von Messwerten vor, wobei jeder Messwert ein Pixel 9, 10 bildet. In Figur 1 sind beispielhaft nur zwei Pixel 9, 10 kenntlich gemacht, obwohl die Einzelbilder 6, 7, 8 aus einer Vielzahl von Pixeln zusammengesetzt sind.

Durch die Zahl der Pixel 9, 10 je Einzelbild 6, 7, 8 ist eine Bildauflösung der Einzelbilder 6, 7, 8 gegeben, welche durch die Detektorauflösung des Bildaufnahmedetektors 4 definiert ist. Der Bildaufnahmedetektor 4 kann hierbei eine zweidimensionale Gitteranordnung von Detektorelementen aufweisen oder in Scannertechnik ausgebildet sein.

Im Folgenden wird näher beschrieben, wie die Einzelbilder 6, 7, 8 mit dem erfindungsgemäßen Verfahren zu einem SR-Bild 11 mit einer verbesserten Bildauflösung, die also höher als Bildauflösung der Einzelbilder 6, 7, 8 ist, kombiniert werden.

Die Einzelbilder 6, 7, 8, sind hierbei aus dem SR-Bild 11 modellierbar, also zumindest näherungsweise rekonstruierbar, indem jeweils eine Abtastfunktion auf das SR-Bild 11 angewendet wird, welche eine Reduktion der Bildauflösung zurück zur Bildauflösung der Einzelbilder 6, 7, 8 beschreibt.

Bei dem erfindungsgemäßen Verfahren wird in einem ersten Schritt zu den Einzelbildern 6, 7, 8, ein optischer Fluss automatisch, also computerimplementiert, berechnet. Hierzu wird beispielweise das Einzelbild 7 als Referenz-Einzelbild ausgewählt, und es wird berechnet, um welchen Betrag und in welche Richtung die lokalen Bildanteile der Einzelbilder 6 und 8 in Bezug auf das Einzelbild 7 verschoben oder allgemein deformiert werden müssen, damit die lokalen Bildanteile miteinander in Deckung gebracht sind. Diese lokalen Bildanteile sind hierbei durch wenige zueinander benachbarte Pixel 9, 10 gegeben.

Im Ergebnis der Berechnung ist somit jedem Einzelbild 6, 7, 8 ein Verschiebungsvektorfeld 12, 13 zugeordnet, wobei im Referenz-Einzelbild 7 das überall verschwindende Verschiebungsvektorfeld zugeordnet ist, welches in Figur 1 nicht weiter dargestellt ist.

Die Verschiebungsvektorfelder 12, 13 bestehen somit aus Verschiebungsvektoren 14, 15, 16, 17, 18, 19 für jedes Pixel 9, 10 des betreffenden Einzelbildes 6, 7, 8.

In Figur 1 sind zur Vereinfachung der Darstellungen nur einzelne Verschiebungsvektoren 14, 15, 16, 17, 18, 19 dargestellt und bezeichnet.

Aus Figur 1 ist ersichtlich, dass die Verschiebungsvektoren 14, 15, 16, 17, 18, 19 innerhalb eines Einzelbildes 6, 7, 8 nicht für alle Pixel 9, 10 konstant sind, sondern über die Pixel 9, 10 des jeweiligen Einzelbildes 6, 7, 8 variieren. Das Verschiebungsvektorfeld 11, 12, 13 ist daher im Allgemeinen ortsabhängig. Dies liegt daran, dass sich die in den Einzelbildern 6, 7, 8 aufgenommene Szene zwischen den Aufnahmen der Einzelbilder 6, 7, 8 in unterschiedlicher Weise verändert hat, beispielsweise durch Bewegung eines Objektes gegenüber einem statischen oder langsam veränderlichen Hintergrund.

Jedes Verschiebungsvektorfeld 12, 13 definiert somit einen Wertebereich, innerhalb dessen die Verschiebungsvektoren 14, 15, 16, 17, 18, 19 über die Pixel 9, 10 innerhalb des Einzelbildes 6, 7, 8 variieren. Hierbei ist jeder Verschiebungsvektor 14, 15, 16, 17, 18, 19 durch seine Richtung und seine Länge definiert, die gemeinsam den Wertebereich bilden.

In einem zweiten Schritt des erfindungsgemäßen Verfahrens werden die Einzelbilder in Segmente 20, 21, 22, 23, 24, 25 derart segmentiert, dass die Pixel 9, 10 innerhalb eines Segments 20, 21, 22, 23, 24, 25 jeweils in einem vorgegebenen Teilbereich des Wertebereich des Verschiebungsvektorfelds 12, 13 liegen, während die Pixel 9, 10 außerhalb des jeweils betrachteten Segments 20, 21, 22, 23, 24, 25 Verschiebungsvektoren 14, 15, 16, 17, 18, 19 aufweisen, welche außerhalb des genannten Teilbereiches liegen. Hierzu wird vorab der jeweilige Wertebereich in Teilbereiche unterteilt.

In Figur 1 ergibt sich das Segment 22 bzw. 25 als Komplement der Segmente 20 und 21 bzw. 23 und 24 in dem jeweiligen Einzelbild 6 bzw. 8.

Die Segmente 20 und 23 bzw. 21 und 24 könnten somit zu einem Bildbestandteil 26 bzw. 27 korrespondieren, der in dem Einzelbild 7 durch eine entsprechende geometrische Form angedeutet ist. In diesem Fall beschreiben die Verschiebungsvektoren innerhalb des Segments 20 bzw. 23 eine Verschiebung des Bildbestandteils 26 zwischen den Einzelbildern 6 bzw. 8 in Bezug auf das Einzelbild 7, während die Verschiebungsvektoren 15, 18 in den Segmenten 21 bzw. 24 die Bildverschiebung des Bildteils 27 in den Einzelbildern 6 bzw. 8 in Bezug auf das Einzelbild 7 beschreiben.

In diesem Fall beschreiben die Verschiebungsvektoren 14 bzw. 17 die Bildverschiebung des Hintergrundes 28 der aufgenommenen Szene. Diese Verschiebungsvektoren 14, 17 können in einer vorgeschalteten Grobregistrierung zum Verschwinden gebracht werden.

In Figur 1 ist zur Vereinfachung der Darstellung gezeigt, dass die Verschiebungsvektoren 14, 15, 16, 17, 18, 19 innerhalb eines Segments 20, 21, 22, 23, 24, 25 zueinander parallel ausgerichtet sind und eine einheitliche Länge aufweisen. Die erwähnten Teilbereiche können jedoch auch so vorgegeben sein, dass die Verschiebungsvektoren 14, 15, 16, 17, 18, 19 innerhalb eines Segments 20, 21, 22, 23, 24, 25 innerhalb eines bestimmten Winkelbereichs und/oder innerhalb eines bestimmten Längenbereichs voneinander abweichen können.

Die Grenzen der vorgegebenen Teilbereiche definieren jedoch die Grenzen der Segmente 20, 21, 22, 23, 24, 25. Es kann sich somit auch ergeben, dass die Segmente 20, 21, 22, 23, 24, 25 nicht jeweils zusammenhängend ausgebildet sind, sondern mehrere voneinander getrennte Mengen von Pixeln 9, 10 umfassen.

In einem dritten Schritt des erfindungsgemäßen Verfahrens wird nun ein Optimierungsverfahren zur Kombination der Einzelbilder 6, 7, 8 zu dem SR-Bild 11 ausgeführt, wobei für die Segmente 20, 21, 22, 23, 24, 25 jeweils wenigstens ein separater, also individueller, Variationsparameter variiert wird.

Hierzu wird für jedes Segment 20, 21, 22, 23, 24, 25 aus dem zugehörigen Teilbereich des Wertebereichs des Verschiebungsvektorfeldes 12, 13 jeweils ein Verschiebungsvektor 29, 30, 31, 32, 33, 34, ausgewählt. Die ausgewählten Verschiebungsvektoren 29, 30, 31, 32, 33, 34 können jeweils durch einen Verschiebungsvektor 14, 15, 16, 17, 18, 19 gegeben sein, den das Verschiebungsvektorfeld 12, 13 an einem Pixel 9, 10 des jeweiligen Einzelbildes 6, 8 in dem betreffenden Segment 20, 21, 23, 24, 25 annimmt. Die Verschiebungsvektoren 29, 30, 31, 32, 33, 34, 35 können jedoch auch durch die Vorgabe der einzelnen Teilbereiche definiert sein, beispielweise als Mittelwert oder Grenzwert des jeweiligen Teilbereichs.

In dem Optimierungsverfahren wird eine Energiefunktion optimiert, welche die Abweichungen der Einzelbilder 6, 7, 8 von rekonstruierten Einzelbildern, die sich durch mathematische Modellierung des Abbildungsvorgangs der Bildaufnahmemittel 2 der Vorrichtung 1 aus einem versuchsweise erstellten SR-Bild 11 ableiten lassen, bewertet. Diese Bewertung kann durch Berechnung der Summe von quadrierten Differenzen oder deren Quadratwurzel zwischen den jeweiligen Einzelbildern 6, 7, 8 und der zugehörigen Rekonstruktion gebildet werden.

Zur Modellierung der Abbildungsvorganges wird auf die Versuchsweise erstellten SR-Bilder 11 ein Operator angewendet, welcher durch Faltung des SR-Bildes 11 mit einer Punktspreizfunktion relative Bildverschiebungen beschreibt.

Im Optimierungsverfahren werden der Bildinhalte des SR-Bilds 11 und die erwähnten Punktspreizfunktionen iterativ variiert, bis sich eine möglichst gute Übereinstimmung der aus dem SR-Bild 11 rekonstruierten Einzelbilder mit den aufgenommenen Einzelbildern 6, 7, 8 ergibt.

Die Energiefunktion enthält einen zusätzlichen additiven Term, welcher ein Bildrauschen modelliert.

Um das Optimierungsverfahren mit separaten Variationsparametern für die einzelnen Segmente 20, 21, 22, 23, 24, 25 durchzuführen, wird aus den Unterteilungen der Einzelbilder 6 , 7, 8 in Segmente 20, 21, 22, 23, 24, 25 eine Unterteilung des SR-Bilds 11 in SR-Segmente 35, 36, 37 abgeleitet.

Dies kann beispielsweise dadurch geschehen, dass zu den Segmenten 20, 23 bzw. 21, 24 jeweils ein SR-Segment 35, 36 ausgewählt wird, welches die korrespondierenden Pixel des SR-Bilds 11 zu den korrespondierenden Segmenten 20, 23 bzw. 21, 24 der Einzelbilder 6, 8 gemeinsam umfasst, und dass das SR-Segment 37 als Komplement der SR-Segmente 35, 36 im SR- Bild 11 gewählt wird.

Zu jedem Verschiebungsvektor 29, 30, 31, 32, 33, 34 wird eine Punktspreizfunktion 38, 39, 40, 41, 42, 43 ausgewählt, welche eine relative Bildverschiebung mit dem zugehörigen Verschiebungsvektor 29, 30, 31, 32, 33, 34 mathematisch beschreibt.

In Ausführungsbeispiel sind die Punktspreizfunktionen 38, 39, 40, 41, 42, 43 als Dirac-Funktionen ausgebildet, deren Position jeweils die Bildverschiebung beschreibt. Bei anderen Ausführungsbeispielen sind andere Punktspreizfunktionen, beispielweise Gauß-Funktionen, verwendet.

In dem Optimierungsverfahren werden die Segmente 20, 21, 22, 23, 24, 25 bzw. die SR-Segmente 35, 36, 37 nacheinander maskiert, um den Beitrag des jeweiligen Segments 20, 21, 22, 23, 24, 25 bzw. SR-Segments 35, 36, 37 mit der zugehörigen Punktspreizfunktion 38, 39, 40, 41, 42, 43 zu der Energiefunktion zu berechnen.

Für das Einzelbild 7, welches als Referenz-Einzelbild verwendet wurde, wird eine globale Punktspreizfunktion 45 verwendet.

In dem Optimierungsverfahren werden die Bildpositionen oder Schwerpunkte der Bildspreizfunktionen 38, 39, 40, 41, 42, 43, 44 als Variationsparameter variiert. Die in Figur 1 gezeigten Punktspreizfunktionen 38, 39, 40, 41, 42, 43, 44 dienen als Startpunkte des Optimierungsverfahrens.

Vor der beschriebenen Segmentierung wird - wie bereits erwähnt - eine Groberegistrierung der Einzelbilder 6, 7, 8 untereinander durchgeführt, durch welche die Verschiebungsvektoren 14, 17 der Segmente 22, 25, welche dem Hintergrund 28 der aufgenommene Szene zugeordnet sind, vollständig oder nahezu vollständig zum Verschwinden gebracht werden können.

Falls sich herausstellt, dass die Verschiebungsvektoren 14, 15, 16, 17, 18, 19 in einem Segment 20, 21, 22, 23, 24, 25 außerhalb eines Vorgabebereiches liegen und damit eine zu große Bildverschiebung anzeigen, wird das zugehörige Segment 20, 21, 22, 23, 24, 25 beim Optimierungsverfahren insgesamt und vollständig maskiert.

Somit kann dieses Segment 20, 21, 22, 23, 24, 25, welches zu einem zu stark veränderlichen Bildinhalt gehört, das Ergebnis des Optimierungsverfahrens nicht ungünstig verfälschen. Es kann auch das zugehörige SR-Segment 35, 36, 37 im Optimierungsverfahren entsprechend maskiert werden.

Alternativ können auch lediglich diejenigen Segmente 20, 21, 22, 23, 24, 25 bzw. SR-Segmente 35, 36, 37 für die Variation im Optimierungsverfahren ausgewählt werden, deren zugehörige Verschiebungsvektoren 14, 15, 16, 17, 18, 19 in einem Vorga-b-ebereich liegen, welcher ein Vertrauenslevel charakterisiert.

In dem Optimierungsverfahren werden zunächst die Variationsparameter der Punktspreizfunktionen 38, 39, 40, 41, 42, 43, 44 für ein versuchsweise erstelltes SR-Bild 11 optimiert. Für den so erhaltenen Satz von optimalen Variationsparametern wird anschließend der Bildinhalt des SR-Bilds 11 variiert, bis die Energiefunktion näher an ihr Optimum geführt ist. Anschließend wird wieder der Satz der Variationsparameter variiert. Dieses Verfahren wird iterativ fortgesetzt, bis eine Abbruchbedingung erfüllt ist.

Nach Berechnung des optimalen SR-Bilds 11 wird dieses SR-Bild an einem Anzeigemittel 45, beispielweise einem Display, angezeigt.

Das berechnete optimale SR-Bild 11 kann auch an einem Ausgabemittel 46, beispielweise einen Datenausgang, zur weiteren Verarbeitung bereitgestellt werden.

Das beschriebene Verfahren wird in der Messvorrichtung 1 kontinuierlich ausgeführt, wobei in regelmäßigen Zeitabständen neue Einzelbilder 6, 7, 8 der Folge von Einzelbildern 6, 7, 8 aufgenommen werden. Das Referenz-Einzelbild 7 wandert mit fortschreitender Zeit in dieser Folge von Einzelbildern 6, 7, 8, und es wird in regelmäßigen Zeitabständen, die durch eine vorgegebene Anzahl von Aufnahmen von Einzelbildern 6, 7, 8 definiert sind, ein neues SR-Bild 11 aus den aktuellen Einzelbildern 6, 7, 8 berechnet und ausgegeben. Auf diese Weise wird die Anzeige an dem Anzeigemitteln 45 in einem durch die Aufnahme neuer Einzelbilder 6, 7, 8 bestimmten Takt aktualisiert.

Das erfindungsgemäße Verfahren sieht mit anderen Worten vor, bisher bekannte Verfahren der Superresolution derart zu modifizieren, dass eine Bewegungsschätzung lokale Bewegungen berücksichtigt und die Bildbereiche 26, 27, 28 der Einzelbilder 6, 7, 8 entsprechend maskiert. Der sich anschließende Teilschritt der Berechnung des hochauflösenden SR-Bilds 11 verwendet diese Maskierung und die lokalen Bewegungen.

Bei der Messvorrichtung zur Aufnahme einer Folge von Einzelbildern 6, 7, 8 in einem nicht-sichtbaren Spektralbereich wird ein Verfahren zur Erzeugung eines SR-Bilds 11 mit einer Bildauflösung, welche höher als eine Bildauflösung der Einzelbilder 6, 7, 8 ist, vorgeschlagen, bei welchem für die Einzelbilder 6, 7, 8 ein Verschiebungsvektorfeld 11, 12 durch eine Berechnung des optischen Flusses ermittelt wird und bei welchem die Einzelbilder 6, 7, 8 bezüglich der Werte des Verschiebungsvektorfelds 11, 12 in Segmente 20, 21, 22, 23, 24, 25 segmentiert werden, wobei ein Optimierungsverfahren zur Berechnung des SR-Bildes 11 aus den Einzelbildern 6, 7, 8 mit individuell den Segmenten 20, 21, 22, 23, 24, 25 zugeordneten Variationsparametern durchgeführt wird.

## Patentansprüche

1. Verfahren zur Erzeugung von SR-Bildern (11) mit verbesserter Bildauflösung, wobei eine Folge von aus Pixeln (9, 10) zusammengesetzten Einzelbildern (6, 7, 8) in einem nicht-sichtbaren Spektralbereich aufgenommen wird und die Einzelbilder (6, 7, 8) in einem Optimierungsverfahren so zu einem SR-Bild (11) kombiniert werden, dass die Einzelbilder (6, 7, 8) der Folge mittels Abtastfunktionen als Abtastungen des SR-Bilds (11) modellierbar sind, wobei im Optimierungsverfahren eine Energiefunktion optimiert wird, wobei die Energiefunktion eine Abweichung der Einzelbilder (6, 7, 8) von dem mit einem mathematischen Modell, welches die Abbildungseigenschaften einer zur Aufnahme der Einzelbilder (6, 7, 8) verwendeten Meßvorrichtung (1) beschreibt, abgebildeten SR-Bild (11) bewertet, **dadurch gekennzeichnet, dass** in einem ersten Schritt ein optischer Fluss zu den Einzelbildern (6, 7, 8) der Folge automatisch berechnet und jedem Einzelbild (6, 7, 8) ein den optischen Fluss beschreibendes Verschiebungsvektorfeld (11, 12) zugeordnet wird, dass in einem zweiten Schritt die Einzelbilder (6, 7) in wenigstens zwei Segmente (20,21, 22, 23, 24, 25) segmentiert werden, wobei die Pixel (9,10) innerhalb eines Segments (20, 21, 22, 23, 24, 25) jeweils einen Verschiebungsvektor (14, 15, 16, 17, 18, 19) in einem vorgegebenen Teilbereich des Wertebereichs des Verschiebungsvektorfelds (11, 12) aufweisen, und dass in einem dritten Schritt das Optimierungsverfahren ausgeführt wird, wobei für die Segmente (20, 21, 22, 23, 24, 25) jeweils wenigstens ein separater Variationsparameter variiert wird, dass aus den Unterteilungen der Einzelbilder (6, 7, 8) in Segmente (20, 21, 22, 23, 24, 25) jeweils eine Unterteilung des SR-Bildes (11) in SR-Segmente (35, 36, 37) abgeleitet wird und dass die einem Segment (20, 21, 22, 23, 24, 25) eines Einzelbildes (6, 7, 8) zugeordnete Abtastfunktion oder Punktspreizfunktion (38, 39, 40, 41, 42, 43, 44) auf ein aus dem Segment abgeleitetes SR-Segment (20, 21, 22, 23, 24, 25) des SR-Bildes (35, 36, 37) angewendet wird.

2. Verfahren nach Anspruch 1, **dadurch gekennzeichnet, dass** im dritten Schritt für jedes Segment (20, 21, 22, 23, 24, 25) ein Verschiebungsvektor (29, 30, 31, 32, 33, 34) aus dem zugehörigen Teilbereich ausgewählt und zur Festlegung des Startpunkts des Optimierungsverfahrens verwendet wird.

3. Verfahren nach Anspruch 1 oder 2, **dadurch gekennzeichnet, dass** ein Einzelbild (6, 7, 8) der Folge als Referenz-Einzelbild (7) ausgewählt wird und/oder dass die Verschiebungsvektorfelder (11, 12) in Bezug auf das Referenz-Einzelbild (7) berechnet werden.

4. Verfahren nach einem der Ansprüche 1 bis 3, **dadurch gekennzeichnet, dass** vor der Berechnung des optischen Flusses in einer globalen Registrierung für jedes Einzelbild (6, 7, 8) eine globale oder starre Transformation berechnet wird, mit welcher korrespondierende Bildinhalte der Einzelbilder (6, 7, 8) optimal in Deckung miteinander oder mit einem Referenz-Einzelbild (7) bringbar sind.

5. Verfahren nach einem der Ansprüche 1 bis 4, **dadurch gekennzeichnet, dass** die Energiefunktion einen Term aufweist, welcher ein Bildrauschen modelliert.

6. Verfahren nach einem der Ansprüche 1 bis 5, **dadurch gekennzeichnet, dass** die Variationsparameter jeweils eine relative Bildverschiebung des Segments (20, 21, 22, 23, 24, 25) beschreiben und/oder dass die Variationsparameter jeweils eine Abtastfunktion oder eine Punktspreizfunktion (38, 39, 40, 41, 42, 43, 44) definieren.

7. Verfahren nach einem der Ansprüche 1 bis 6, **dadurch gekennzeichnet, dass** im Optimierungsverfahren nach Optimierung der Variationsparameter iterativ ein angepasstes SR-Bild (11) erstellt wird, für welches die Variationsparameter erneut optimiert werden.

8. Verfahren nach einem der Ansprüche 1 bis 7, **dadurch gekennzeichnet, dass** im dritten Schritt festgelegt wird, für welche Segmente (20, 21, 22, 23, 24, 25) der Einzelbildern (6, 7, 8) das Optimierungsverfahren ausgeführt wird, und/oder dass das Optimierungsverfahren nur für diejenigen Segmente (20, 21, 22, 23, 24, 25) der Einzelbilder (6, 7, 8) oder SR-Segmente (35, 36, 37) des SR-Bildes (11) ausgeführt wird, deren zugehörige Verschiebungsvektoren (14, 15, 16, 17, 18, 19) in einem Vorgabebereich oder außerhalb eines Vorgabebereichs liegen.

9. Messvorrichtung (1), mit Bildaufnahmemitteln (2) zur Aufnahme einer Folge von Einzelbildern (6, 7, 8) in einem nicht-sichtbaren Spektralbereich, **dadurch gekennzeichnet, dass** eine Bildauswerteeinheit (5) zur Ausführung eines verfahrens nach einem der vorangegangenen Ansprüche ausgebildet und eingerichtet ist.

## Claims

1. Method for generating SR images (11) with improved image resolution, wherein a sequence of individual images (6, 7, 8) composed of pixels (9, 10) in a non-visible spectral range is taken and the individual images (6, 7, 8) are combined in an optimisation process to form an SR image (11) such that the individual images (6, 7, 8) of the sequence can be modelled as samples of the SR image (11) by sampling functions, wherein an energy function is optimised in the optimisation process, wherein the energy function evaluates a deviation of the individual images (6, 7, 8) from the SR image (11) imaged by a mathematical model which describes the imaging properties of a measuring device (1) used to take the individual images (6, 7, 8), **characterised in that** in a first step, an optical flow to the individual images (6, 7, 8) of the sequence is automatically calculated and a displacement vector field (11, 12) describing the optical flow is allocated to each individual image (6, 7, 8), that in a second step, the individual images (6, 7) are segmented into at least two segments (20, 21, 22, 23, 24, 25), wherein the pixels (9, 10) within a segment (20, 21, 22, 23, 24, 25) each have a displacement vector (14, 15, 16, 17, 18, 19) in a predefined sub-range of the value range of the displacement vector field (11, 12), and that in a third step, the optimisation process is carried out, wherein for the segments (20, 21, 22, 23, 24, 25) in each case at least one separate variation parameter is varied, that from the subdivisions of the individual images (6, 7, 8) into segments (20, 21, 22, 23, 24, 25), in each case a subdivision of the SR image (11) into SR segments (35, 36, 37) is derived, and that the sampling function or point spread function (38, 39, 40, 41, 42, 43, 44) allocated to a segment (20, 21, 22, 23, 24, 25) of an individual image (6, 7, 8) is applied to an SR segment (20, 21, 22, 23, 24, 25) of the SR image (35, 36, 37), which is derived from the segment.

2. Method as claimed in claim 1, **characterised in that** in the third step, for each segment (20, 21, 22, 23, 24, 25) a displacement vector (29, 30, 31, 32, 33, 34) is selected from the associated sub-range and is used to establish the starting point of the optimisation process.

3. Method as claimed in claim 1 or 2, **characterised in that** an individual image (6, 7, 8) of the sequence is selected as a reference individual image (7), and/or that the displacement vector fields (11, 12) are calculated with respect to the reference individual image (7).

4. Method as claimed in any one of claims 1 to 3, **characterised in that** prior to calculation of the optical flow in a global registration for each individual image (6, 7, 8), a global or rigid transformation is calculated, with which corresponding image contents of the individual images (6, 7, 8) can be optimally brought into alignment with one another or with a reference individual image (7).

5. Method as claimed in any one of claims 1 to 4, **characterised in that** the energy function has a term which models an image noise.

6. Method as claimed in any one of claims 1 to 5, **characterised in that** the variation parameters each describe a relative image displacement of the segment (20, 21, 22, 23, 24, 25) and/or that the variation parameters each define a sampling function or a point spread function (38, 39, 40, 41, 42, 43, 44).

7. Method as claimed in any one of claims 1 to 6, **characterised in that** in the optimisation process, after optimisation of the variation parameters, an adapted SR image (11) is iteratively created, for which the variation parameters are re-optimised.

8. Method as claimed in any one of claims 1 to 7, **characterised in that** in the third step it is established for which segments (20, 21, 22, 23, 24, 25) of the individual images (6, 7, 8) the optimisation process is carried out, and/or that the optimisation process is carried out only for those segments (20, 21, 22, 23, 24, 25) of the individual images (6, 7, 8) or SR segments (35, 36, 37) of the SR image (11) which have associated displacement vectors (14, 15, 16, 17, 18, 19) lying in a set range or outside a set range.

9. Measuring device (1), having image-taking means (2) for taking a sequence of individual images (6, 7, 8) in a non-visible spectral range, **characterised in that** an image evaluation unit (5) is designed and arranged to carry out a method as claimed in any one of the preceding claims.

## Revendications

1. Procédé de génération d'images superésolues SR (11) à résolution améliorée, dans lequel on enregistre une suite d'images individuelles (6, 7, 8) composées de pixels (9, 10) dans un domaine spectral non visible et on combine les images individuelles (6, 7, 8) dans un procédé d'optimisation en une image SR (11), d'une manière telle que les images individuelles (6, 7, 8) de la suite soient modélisables au moyen de fonctions de balayage en tant que balayages de l'image SR (11), dans lequel on optimise une fonction d'énergie dans le procédé d'optimisation, dans lequel la fonction d'énergie interprète un écart des images individuelles (6, 7, 8) par rapport à l'image SR (11) reproduite avec un modèle mathématique, qui décrit les propriétés de reproduction d'un dispositif de mesure (1) utilisé pour l'enregistrement des images individuelles (6, 7, 8), **caractérisé en ce que** dans une première étape on calcule automatiquement un flux optique vers les images individuelles (6, 7, 8) de la suite et on associe à chaque image individuelle (6, 7, 8) un champ de vecteurs de déplacement (11, 12) décrivant le flux optique, **en ce que** dans une deuxième étape on segmente les images individuelles (6, 7) en au moins deux segments (20, 21, 22, 23, 24, 25), dans lequel les pixels (9, 10) situés à l'intérieur d'un segment (20, 21, 22, 23, 24, 25) présentent respectivement un vecteur de déplacement (14, 15, 16, 17, 18, 19) dans une région partielle prédéterminée du domaine de valeurs du champ de vecteurs de déplacement (11, 12), et **en ce que** dans une troisième étape on exécute le procédé d'optimisation, dans lequel on fait varier pour les segments (20, 21, 22, 23, 24, 25) respectivement au moins un paramètre de variation distinct, **en ce que** l'on déduit des subdivisions des images individuelles (6, 7, 8) en segments (20, 21, 22, 23, 24, 25) respectivement une subdivision de l'image SR (11) en segments SR (35, 36, 37) et **en ce que** l'on applique la fonction de balayage ou la fonction de diffusion de point (38, 39, 40, 41, 42, 43, 44) associée à un segment (20, 21, 22, 23, 24, 25) d'une image individuelle (6, 7, 8) à un segment SR (35, 36, 37) de l'image SR déduit du segment (20, 21, 22, 23, 24, 25).

2. Procédé selon la revendication 1, **caractérisé en ce que** dans la troisième étape on choisit pour chaque segment (20, 21, 22, 23, 24, 25) un vecteur de déplacement (29, 30, 31, 32, 33, 34) dans la région partielle correspondante et on l'utilise pour la fixation du point de départ du procédé d'optimisation.

3. Procédé selon la revendication 1 ou 2, **caractérisé en ce que** l'on choisit une image individuelle (6, 7, 8) de la suite comme image individuelle de référence (7) et/ou **en ce que** l'on calcule les champs de vecteurs de déplacement (11, 12) par rapport à l'image individuelle de référence (7).

4. Procédé selon l'une quelconque des revendications 1 à 3, **caractérisé en ce que**, avant le calcul du flux optique dans un enregistrement global, on calcule pour chaque image individuelle (6, 7, 8) une transformation globale ou rigide, avec laquelle des contenus d'image correspondants des images individuelles (6, 7, 8) peuvent être amenés de façon optimale en recouvrement les uns avec les autres ou avec une image individuelle de référence (7).

5. Procédé selon l'une quelconque des revendications 1 à 4, **caractérisé en ce que** la fonction d'énergie présente un terme, qui modélise un bruit d'image.

6. Procédé selon l'une quelconque des revendications 1 à 5, **caractérisé en ce que** les paramètres de variation décrivent respectivement un déplacement d'image relatif du segment (20, 21, 22, 23, 24, 25) et/ou **en ce que** les paramètres de variation définissent respectivement une fonction de balayage ou une fonction de diffusion de point (38, 39, 40, 41, 42, 43, 44).

7. Procédé selon l'une quelconque des revendications 1 à 6, **caractérisé en ce que**, dans le procédé d'optimisation après l'optimisation des paramètres de variation, on construit de façon itérative une image SR adaptée (11), pour laquelle on optimise de nouveau les paramètres de variation.

8. Procédé selon l'une quelconque des revendications 1 à 7, **caractérisé en ce que** dans la troisième étape on définit pour quels segments (20, 21, 22, 23, 24, 25) des images individuelles (6, 7, 8) on exécute le procédé d'optimisation, et/ou **en ce que** l'on exécute le procédé d'optimisation uniquement pour les segments (20, 21, 22, 23, 24, 25) des images individuelles (6, 7, 8) ou les segments SR (35, 36, 37) de l'image SR (11), dont les vecteurs de déplacement correspondants (14, 15, 16, 17, 18, 19) sont situés dans une région désignée ou à l'extérieur d'une région désignée.

9. Dispositif de mesure (1), comportant des moyens d'enregistrement d'images (2) pour l'enregistrement d'une suite d'images individuelles (6, 7, 8) dans un domaine spectral non visible, **caractérisé en ce qu'**une unité d'interprétation d'image (5) est configurée et constituée pour la mise en oeuvre d'un procédé selon l'une quelconque des revendications précédentes.
